# EUROPEAN PATENT APPLICATION

(11) **EP 4 567 965 A1**
(43) Date of publication of application: **11.06.2025**
(21) Application number: 24180470.7
(22) Date of filing: 06.06.2024
(51) Int. Cl.: H01M 10/613, H01M 10/647, H01M 10/6567, H01M 50/209, H01M 50/238, H01M 50/242, H01M 50/291

(54) **CELL FRAME AND ENERGY STORAGE SYSTEM INCLUDING THE SAME**

(30) Priority: 05.12.2023 KR 20230174428
(71) Applicant: Samsung SDI Co., Ltd., Yongin-si, Gyeonggi-do 17084 (KR)
(72) Inventor: Yoon, Jong Wook, 16678 Suwon-si, Gyeonggi-do (KR)
(74) Representative: Gulde & Partner

(57) **Abstract**

A cell frame includes a pair of first sidewalls spaced apart from each other in a first direction and configured to be deformed by an external force; and a pair of second sidewalls spaced apart from each other in a second direction crossing the first direction, coupled to the pair of first sidewalls, and configured to be deformed by an external force.

## Description

### BACKGROUND

### 1. Field

Aspects of embodiments of the present invention relates to a cell frame and an energy storage system including the same.

### 2. Description of Related Art

In general, an energy storage system (ESS) is a device that can store surplus electricity or store electricity generated using renewable energy. The energy storage system may be constructed by installing a plurality of battery modules in a rack and holding a plurality of racks in a container.

Methods for cooling the energy storage system include an air-cooling method and a water-cooling method. Unlike the air-cooling method in which temperature differences between battery cells are large and high temperature-sections are generated locally, the water-cooling method is advantageous for managing a target temperature and effectively controlling cooling. However, in the case of the water-cooled energy storage system, because the battery cells are disposed in a sealed container, there is a risk of an accident such as an explosion occurring due to an excessive increase in internal pressure when a battery cell ignites.

The above information disclosed in this Background section is provided for enhancement of understanding of the background of the present disclosure, and, therefore, it may contain information that does not constitute related (or prior) art.

### SUMMARY

The present invention is set out in the appended set of claims, wherein the drawings and respective description relate to advantageous embodiments thereof.

Aspects of embodiments of the present invention are directed to a cell frame capable of preventing or substantially reducing the likelihood of an accident due to an increase in internal pressure when thermal runaway of a battery cell occurs, and an energy storage system including the same.

These and other aspects and features of the present disclosure will be described in or will be apparent from the following description of some embodiments of the present disclosure.

According to some embodiments of the present invention, there is provided a cell frame including: a pair of first sidewalls spaced apart from each other in a first direction and configured to be deformed by an external force; and a pair of second sidewalls spaced apart from each other in a second direction crossing the first direction, coupled to the pair of first sidewalls, and configured to be deformed by an external force.

In some embodiments, an accommodation part in which a plurality of battery cells are accommodated is provided in a space defined by the first sidewalls and the second sidewalls.

In some embodiments, the cell frame further includes: a seating plate coupled to the first sidewalls and the second sidewalls and configured to cover an opening provided in one surface of the accommodation part and on which the battery cells are seated.

In some embodiments, any one or more of the first sidewalls and the second sidewalls define a space therebetween, the space being reduced in response to an external force is define sidewalls.

In some embodiments, each of the first sidewalls includes: a first plate; a second plate spaced apart from the first plate and facing the first plate, the first and second plates being separated by a first air layer; and a first connecting part connecting the first plate and the second plate.

In some embodiments, a distance between the first plate and the second plate is reduced in response to the first connecting part being ruptured by an external force.

In some embodiments, each one of the second sidewalls includes: a third plate; a fourth plate spaced apart from the third plate and facing the third plate, the third and fourth plates being separated by a second air layer; and a second connecting part connecting the third plate and the fourth plate.

In some embodiments, a distance between the third plate and the fourth plate is reduced in response to the second connecting part being ruptured by an external force.

In some embodiments, the cell frame further includes: a first partition wall in the accommodation part and having a hallow shape, the first partition wall being configured to partitioning the accommodation part and to be deformed by an external force.

In some embodiments, the first partition wall includes: a first partition wall plate; a second partition wall plate spaced apart from the first partition wall plate and facing the first partition wall plate, the first and second partition wall plate being separated by a first partition wall air layer; and a first partition wall connecting part connecting the first partition wall plate and the second partition wall plate.

In some embodiments, a distance between the first partition wall plate and the second partition wall plate
is reduced in response to the first partition wall connecting part being ruptured by an external force.

In some embodiments, the first partition wall includes a plurality of first partition walls spaced apart from each other in the first direction.

In some embodiments, the cell frame further includes: a second partition wall positioned to intersect the first partition wall and having a hollow shape, the second partition wall being configured to partition the accommodation part and to be deformed by an external force.

In some embodiments, the second partition wall includes: a third partition wall plate; a fourth partition wall plate spaced apart from the third partition wall plate and facing the third partition wall plate, the third and fourth partition wall plates being separated by a second partition wall air layer; a second partition wall connecting part connecting the third partition wall plate and the fourth partition wall plate.

In some embodiments, a distance between the third partition wall plate and the fourth partition wall plate
is reduced in response to the second partition wall connecting part being ruptured by an external force.

In some embodiments, the second partition wall includes a plurality of second partition walls spaced apart from each other in the second direction.

According to some embodiments of the present invention, there is provided an energy storage system including: a container; the cell frame accommodated in the container; a plurality of battery cells accommodated in the cell frame; and a cooling fluid configured to be injected into the container and in which the plurality of the battery cells are immersed.

In some embodiments, a first portion of one of the battery cells is configured to be inserted into the cell frame; and a second portion of the one of the battery cells is exposed from the cell frame.

In some embodiments, the second portion is configured to be immersed in the cooling fluid; and the cell frame is not immersed in the cooling fluid.

In some embodiments, the second portion includes: a vent; and a cell terminal.

According to some embodiments of the present invention, because a cooling fluid does not fill a lower region of a container where a cell frame is located but fills an upper region of a container where a second portion of a battery cell exposed from the cell frame is located, the second portion of the battery cell including a cell terminal with a large amount of heat generation can be intensively cooled, and because the cooling fluid does not need to fully fill the container, an amount of the cooling fluid injected into the container can be reduced.

According to some embodiments of the present invention, when thermal runaway of a battery cell occurs, a cell frame which accommodates the battery cell and is deformed by an external force can reduce an increase in internal pressure of a container to prevent or substantially reduce damage to the container.

However, the effects obtainable through the present disclosure are not limited to the above effects, and other technical effects that are not mentioned will be clearly understood by those skilled in the art from the following description of the present disclosure.

### BRIEF DESCRIPTION OF THE DRAWINGS

The drawings attached to this specification illustrate some embodiments of the present disclosure, and further describe aspects and features of the present disclosure together with the detailed description of the present disclosure. However, the present disclosure should not be construed as being limited to the drawings:
FIG. 1 is a schematic perspective view illustrating an inner portion of an energy storage system according to some embodiments of the present invention;
FIG. 2 is a schematic side cross-sectional view illustrating the energy storage system according to some embodiments of the present invention;
FIG. 3 is a schematic perspective view illustrating a cell frame in the energy storage system according to some embodiments of the present invention;
FIG. 4 is a schematic exploded perspective view illustrating the cell frame in the energy storage system according to some embodiments of the present invention;
FIG. 5 is schematic perspective and partially enlarged cross-sectional views illustrating a cell frame according to some embodiments of the present invention;
FIG. 6 is schematic perspective and partially enlarged cross-sectional views illustrating a cell frame according to some other embodiments of the present invention;
FIG. 7 is a schematic cross-sectional view illustrating operational states of any one of the cell frames of FIGS. 5-6, according to some embodiments of the present invention;
FIG. 8 is schematic perspective and partially enlarged cross-sectional views illustrating a cell frame according to still other embodiments of the present invention; and
FIG. 9 is a schematic cross-sectional view illustrating operational states of any one of the cell frames of FIGS. 5 and 8, according to some embodiments of the present invention.

### DETAILED DESCRIPTION

Herein, some embodiments of the present disclosure will be described, in further detail, with reference to the accompanying drawings. The terms or words used in this specification and claims should not be construed as being limited to the usual or dictionary meaning and should be interpreted as meaning and concept consistent with the technical idea of the present disclosure based on the principle that the inventor can be his/her own lexicographer to appropriately define the concept of the term.

The embodiments described in this specification and the configurations shown in the drawings are provided as some example embodiments of the present disclosure and do not represent all of the technical ideas, aspects, and features of the present disclosure. Accordingly, it is to be understood that there may be various equivalents and modifications that may replace or modify the embodiments described herein at the time of filing this application.

It is to be understood that when an element or layer is referred to as being "on," "connected to," or "coupled to" another element or layer, it may be directly on, connected, or coupled to the other element or layer or one or more intervening elements or layers may also be present. When an element or layer is referred to as being "directly on," "directly connected to," or "directly coupled to" another element or layer, there are no intervening elements or layers present. For example, when a first element is described as being "coupled" or "connected" to a second element, the first element may be directly coupled or connected to the second element or the first element may be indirectly coupled or connected to the second element via one or more intervening elements.

In the figures, dimensions of the various elements, layers, etc. may be exaggerated for clarity of illustration. The same reference numerals designate the same or like elements. As used herein, the term "and/or" includes any and all combinations of one or more of the associated listed items. Further, the use of "may" when describing embodiments of the present disclosure relates to "one or more embodiments of the present disclosure." Expressions, such as "at least one of" and "any one of," when preceding a list of elements, modify the entire list of elements and do not modify the individual elements of the list. When phrases such as "at least one of A, B, and C," "at least one of A, B, or C," "at least one selected from a group of A, B, and C," or "at least one selected from among A, B, and C" are used to designate a list of elements A, B, and C, the phrase may refer to any and all suitable combinations or a subset of A, B, and C, such as A, B, C, A and B, A and C, B and C, or A and B and C. As used herein, the terms "use," "using," and "used" may be considered synonymous with the terms "utilize," "utilizing," and "utilized," respectively. As used herein, the terms "substantially," "about," and similar terms are used as terms of approximation and not as terms of degree, and are intended to account for the inherent variations in measured or calculated values that would be recognized by those of ordinary skill in the art.

It is to be understood that, although the terms "first," "second," "third," etc. may be used herein to describe various elements, components, regions, layers, and/or sections, these elements, components, regions, layers, and/or sections should not be limited by these terms. These terms are used to distinguish one element, component, region, layer, or section from another element, component, region, layer, or section. Thus, a first element, component, region, layer, or section discussed below could be termed a second element, component, region, layer, or section without departing from the teachings of example embodiments.

Spatially relative terms, such as "beneath," "below," "lower," "above," "upper," and the like, may be used herein for ease of description to describe one element or feature's relationship to another element(s) or feature(s) as illustrated in the figures. It is to be understood that the spatially relative terms are intended to encompass different orientations of the device in use or operation in addition to the orientation depicted in the figures. For example, if the device in the figures is turned over, elements described as "below" or "beneath" other elements or features would then be oriented "above" or "over" the other elements or features. Thus, the term "below" may encompass both an orientation of above and below. The device may be otherwise oriented (e.g., rotated 90 degrees or at other orientations), and the spatially relative descriptors used herein should be interpreted accordingly.

The terminology used herein is for the purpose of describing embodiments of the present disclosure and is not intended to be limiting of the present disclosure. As used herein, the singular forms "a" and "an" are intended to include the plural forms as well, unless the context clearly indicates otherwise. It is to be further understood that the terms "includes," "including," "comprises," and/or "comprising," when used in this specification, specify the presence of stated features, integers, steps, operations, elements, and/or components but do not preclude the presence or addition of one or more other features, integers, steps, operations, elements, components, and/or groups thereof.

Also, any numerical range disclosed and/or recited herein is intended to include all sub-ranges of the same numerical precision subsumed within the recited range. For example, a range of "1.0 to 10.0" is intended to include all subranges between (and including) the recited minimum value of 1.0 and the recited maximum value of 10.0, that is, having a minimum value equal to or greater than 1.0 and a maximum value equal to or less than 10.0, such as, for example, 2.4 to 7.6. Any maximum numerical limitation recited herein is intended to include all lower numerical limitations subsumed therein, and any minimum numerical limitation recited in this specification is intended to include all higher numerical limitations subsumed therein. Accordingly, Applicant reserves the right to amend this specification, including the claims, to expressly recite any sub-range subsumed within the ranges expressly recited herein.

References to two compared elements, features, etc. as being "the same" may mean that they are "substantially the same." Thus, the phrase "substantially the same" may include a case having a deviation that is considered low in the art, for example, a deviation of 5% or less. In addition, when a certain parameter is referred to as being uniform in a given region, it may mean that it is uniform in terms of an average.

Throughout the specification, unless otherwise stated, each element may be singular or provided as a plurality.

When an arbitrary element is referred to as being disposed (or located or positioned) on the "above (or below)" or "on (or under)" a component, it may mean that the arbitrary element is placed in contact with the upper (or lower) surface of the component and may also mean that another component may be interposed between the component and any arbitrary element disposed (or located or positioned) on (or under) the component.

In addition, it is to be understood that when an element is referred to as being "coupled," "linked," or "connected" to another element, the elements may be directly "coupled," "linked," or "connected" to each other, or one or more intervening elements may be present therebetween, through which the element may be "coupled," "linked," or "connected" to another element. In addition, when a part is referred to as being "electrically coupled" to another part, the part may be directly electrically connected to another part or one or more intervening parts may be present therebetween such that the part and the another part are indirectly electrically connected to each other.

Throughout the specification, when "A and/or B" is stated, it means A, B, or A and B, unless otherwise stated. That is, "and/or" includes any or all combinations of a plurality of items enumerated. When "C to D" is stated, it means C or more and D or less, unless otherwise specified.

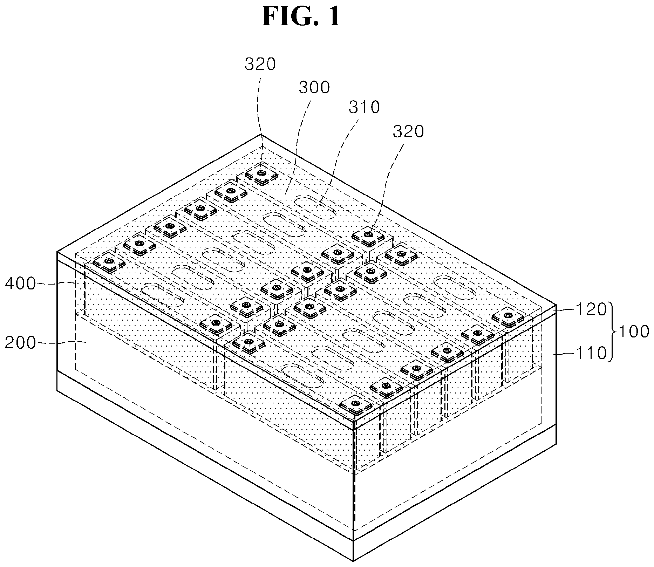

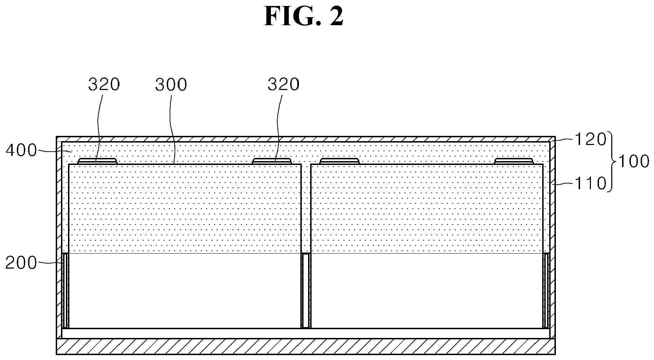

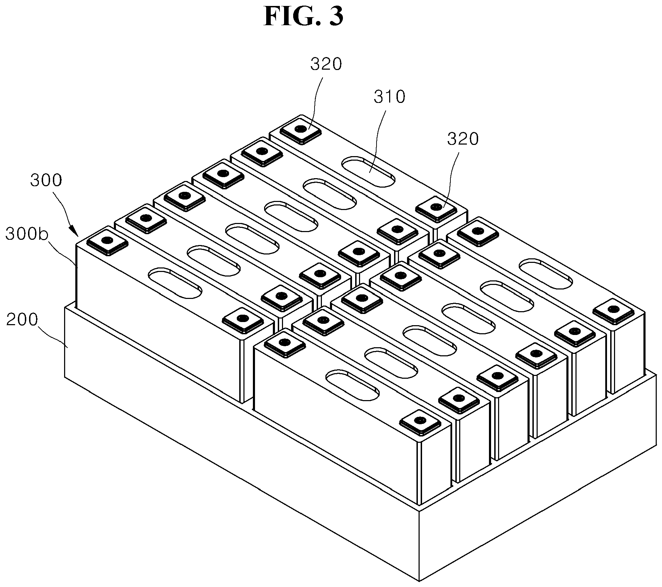

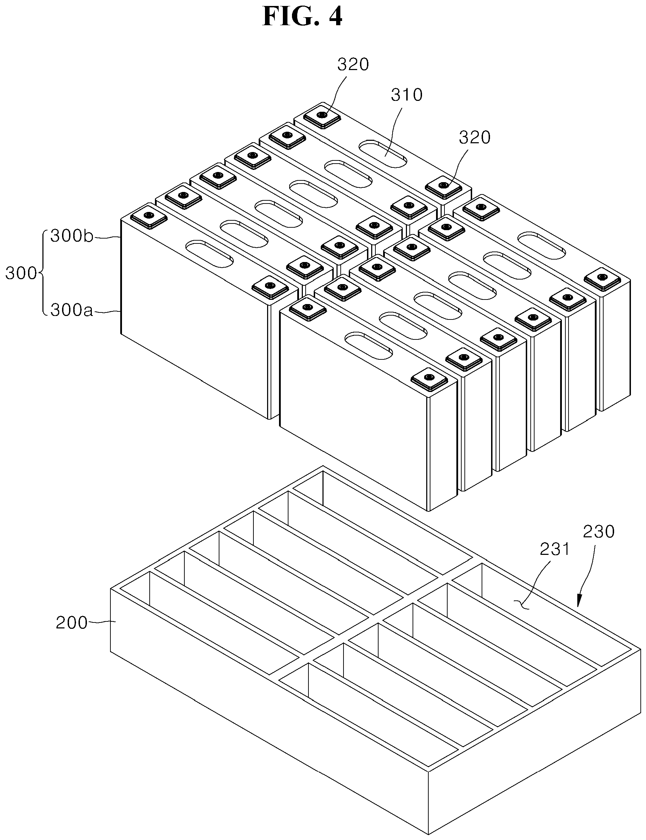

FIG. 1 is a schematic perspective view illustrating an inner portion of an energy storage system according to some embodiments of the present invention, and FIG. 2 is a schematic side cross-sectional view illustrating the energy storage system according to some embodiments of the present invention. FIG. 3 is a schematic perspective view illustrating a cell frame in the energy storage system according to some embodiments of the present invention, and FIG. 4 is a schematic exploded perspective view illustrating the cell frame in the energy storage system according to some embodiments of the present invention.

Referring to FIGS. 1 to 4, the energy storage system according to some embodiments of the present invention includes a container 100, a cell frame 200, a battery cell 300, and a cooling fluid 400.

The container 100 may form a rough exterior of the energy storage system and entirely support the cell frame 200 and the battery cell 300. The cooling fluid 400 may be accommodated in the container 100. The container 100 may include a box 110 and a cover 120.

The box 110 may form a lower exterior of the container 100 and provide a space for accommodating the cooling fluid 400. As an example, the box 110 may be formed in a box shape in which an inner portion is empty and an upper surface is opened. A design of a height and an area of the box 110 may be variously changed in a suitable manner according to a size and the number of battery cells 300, and the like.

The cooling fluid 400 may be accommodated in the box 110. An inner space of the box 110 may be divided into an upper region filled with the cooling fluid 400 and a lower region not filled with the cooling fluid 400. The upper region may be filled with air and the cooling fluid 400 whose phase has changed into gas.

The cover 120 may form an upper exterior of the container 100 and open or close the inner space of the box 110. The cover 120 may be formed in a plate shape and disposed to face an upper surface of the box 110.

The cover 120 may be detachably coupled to the box 110. As an example, the cover 120 may be fixed to the upper surface of the box 110 using any of various suitable types of coupling methods such as a bolting method, a welding method, and a fitting method.

The cell frame 200 is accommodated in the container 100. The cell frame 200 may be accommodated in the box 110 and seated on a bottom surface of the box 110. The cell frame 200 may be fixedly fitted into the box 110.

The cell frame 200 may be deformed by an external force. In this case, the external force may be pressure applied to the cell frame 200 due to, for example, a swelling phenomenon of the battery cell 300. The cell frame 200 may be deformed by bending. The cell frame 200 may include an elastically deformable material.

The cell frame 200 may accommodate the battery cell 300. An accommodation part 230 for accommodating a plurality of battery cells 300 may be provided in the cell frame 200. The battery cell 300 may be fitted into the accommodation part 230 and fixed to the cell frame 200. The accommodation part 230 may include a plurality of unit accommodation parts 231 for individually accommodating the plurality of battery cells 300.

The battery cell 300 may function as a unit structure configured to store and supply power in the energy storage system. An example in which the battery cell 300 of the present invention is a lithium-ion secondary battery and has a prismatic shape will be described. However, the present invention is not limited thereto, and the battery cell 300 may include a lithium polymer battery, cylindrical battery, and/or the like.

The plurality of battery cells 300 may be disposed in a first direction. In addition, the plurality of battery cells 300 disposed in the first direction may be disposed in a second direction crossing (e.g., intersecting) the first direction.

The battery cell 300 may include a first portion 300a and a second portion 300b. The first portion 300a of the battery cell 300 may be accommodated in the cell frame 200. For example, the first portion 300a of the battery cell 300 may be inserted into the accommodation part 230.

The second portion 300b other than the first portion 300a of the battery cell 300 may not be inserted into the accommodation part 230 of the cell frame 200 and may be exposed from the cell frame 200. The second portion 300b of the battery cell 300 may include a vent 310 and a cell terminal 320.

The vent 310 may be opened or closed in conjunction with a change in internal pressure of the battery cell 300. That is, the vent 310 may be opened when the internal pressure of the battery cell 300 rises to a set pressure or more due to an overcharging, a fire, or the like, and may discharge emissions such as flames and gas from the inside of the battery cell 300 to the outside of the battery cell 300.

The cell terminal 320 may protrude from the second portion 300b of the battery cell 300 in a direction in which the cover 120 of the container 100 is located. The cell terminal 320 may be provided as a pair of cell terminals 320. The pair of cell terminals 320 may be symmetrically disposed at both sides of the battery cell 300. The pair of cell terminals 320 may have different polarities.

The cooling fluid 400 is injected into the container 100, and the plurality of battery cells 300 are immersed in the cooling fluid 400. The cooling fluid 400 may be accommodated in the box 110 and may cool the battery cells 300 accommodated in the cell frame 200.

The cooling fluid 400 may be a fluid capable of cooling the battery cells 300 through heat exchange with the battery cells 300. For example, the cooling fluid may include at least any one of water, a Novec series refrigerant, and a nonconductive liquid.

The second portion 300b of the battery cell 300 may be immersed in the cooling fluid 400, and the cell frame 200 may not be immersed in the cooling fluid 400. The cooling fluid 400 does not fill the lower region of the box 110 where the cell frame 200 is located and fills only the upper region of the box 110 where the second portion 300b of the battery cell 300 exposed from the cell frame 200 is located.

Accordingly, the second portion 300b of the battery cell 300 including the cell terminal 320 with a large amount of heat generation can be intensively cooled, and because the cooling fluid 400 does not need to fully fill the container 100, an amount of the cooling fluid 400 injected into the container 100 can be reduced.

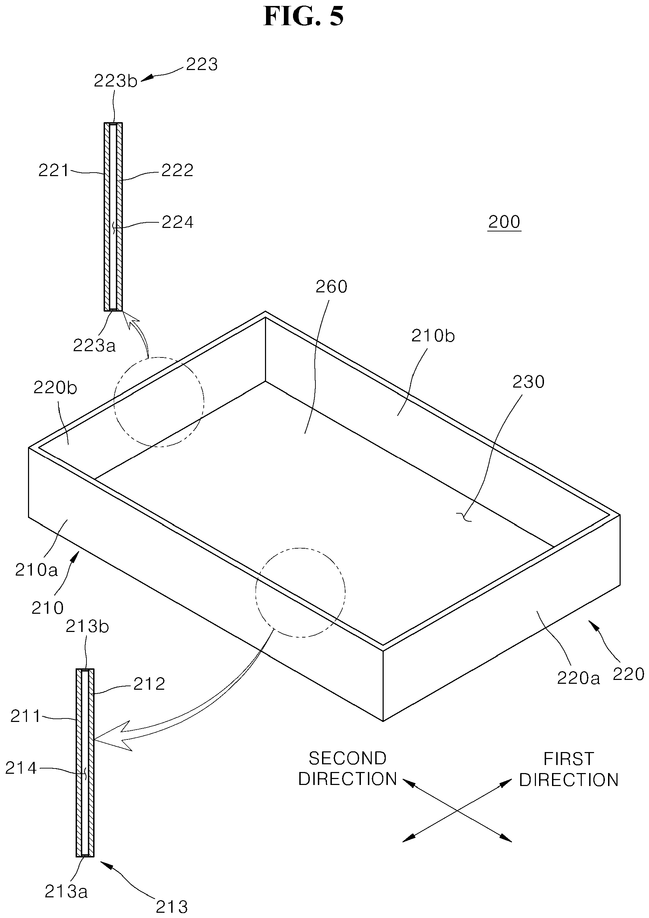

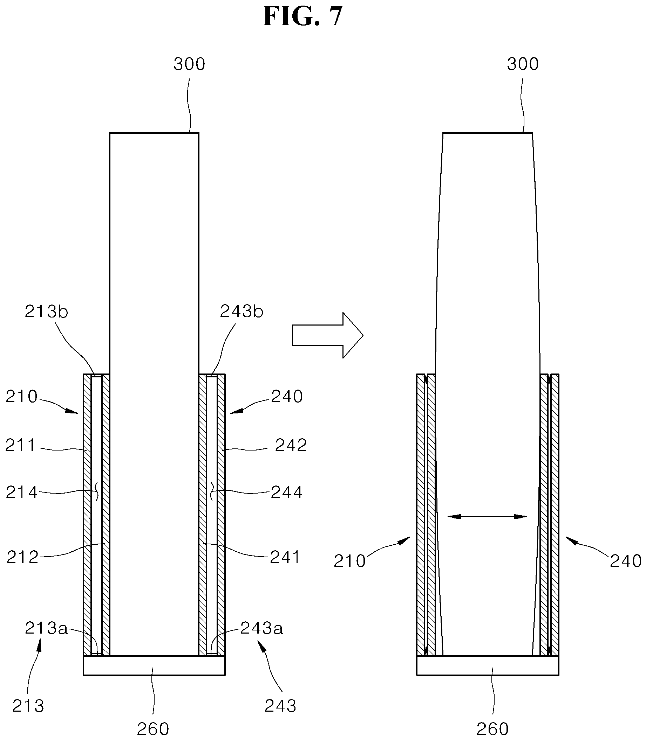

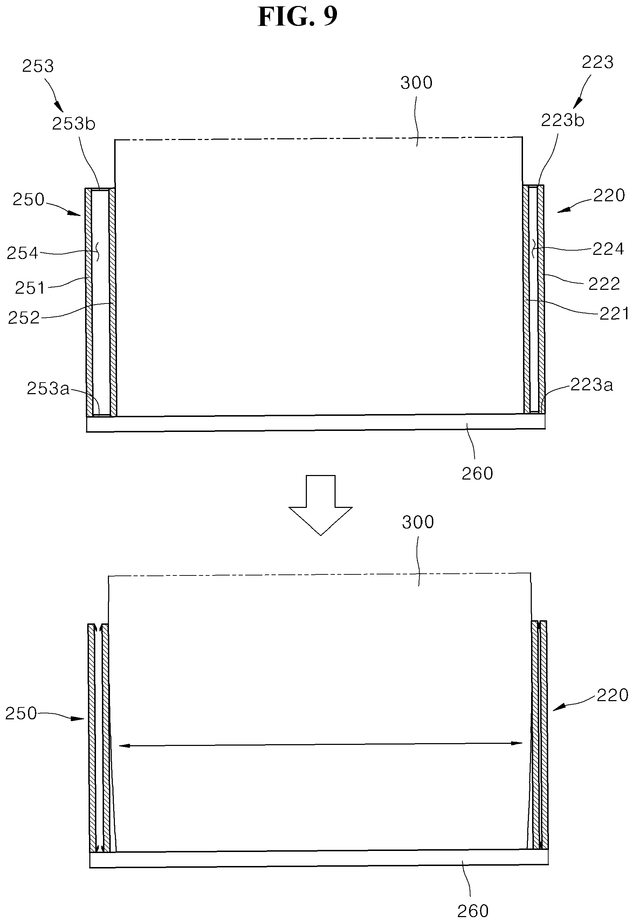

FIG. 5 is schematic perspective and partially enlarged cross-sectional views illustrating a cell frame according to some embodiments of the present invention. FIGS. 7 and 9 are schematic cross-sectional views illustrating operational states of the cell frame according to some embodiments of the present invention.

Referring to FIGS. 4, 5, 7, and 9, a cell frame 200 according to some embodiments of the present invention may include a first sidewall 210, a second sidewall 220, and a seating plate 260.

The first sidewall 210 is provided as a pair of first sidewalls 210, and the pair of first sidewalls 210 are disposed to be spaced apart from each other in a first direction. A pair of first sidewalls 210a and 210b may be disposed to face each other. The first sidewall 210 may be deformed by an external force. Thus, the space which is reduced by an external force is provided in any one or more of the first sidewalls 210a and 210 and the second sidewalls 220.

The first sidewall 210 may be deformed by bending. The first sidewall 210 may include an elastically deformable material.

A space capable of being reduced by an external force may be included in the first sidewall 210. For example, the first sidewall 210 may be formed to have a hollow shape with an empty inner portion. The first sidewall 210 may include a first plate 211, a second plate 212, a first connecting part 213, and a first air layer 214.

The first plate 211 may be formed in a substantially plate shape. The first plate 211 may be formed with a set length in a second direction.

The second plate 212 may be disposed to be spaced apart from the first plate 211 and face the first plate 211. The second plate 212 may be formed in a substantially plate shape. The second plate 212 may be formed with a preset length in the second direction.

The first connecting part 213 may connect the first plate 211 and the second plate 212. The first connecting part 213 may be provided as a pair of first connecting parts 213. A pair of first connecting parts 213a and 213b may connect both side end portions of the first plate 211 and the second plate 212.

When an external force is applied to any one or more of the first plate 211 and the second plate 212, the first connecting part 213 may be deformed or may rupture. According to an embodiment, when the first connecting part 213 is ruptured by an external force, a distance between the first plate 211 and the second plate 212 may be reduced.

When pressure is applied to any one or more of the first plate 211 and the second plate 212 due to, for example, a swelling phenomenon of a battery cell 300, the first connecting part 213 may rupture, the distance between the first plate 211 and the second plate 212 may be reduced, and the space of an accommodation part 230 for accommodating the battery cell 300 in which the swelling phenomenon occurs may be expanded.

The first air layer 214 may be provided between the first plate 211 and the second plate 212. In a state in which an external force is not applied to any one or more of the first plate 211 and the second plate 212, the first air layer 214 may serve to continuously maintain a shape of the first plate 211 and the second plate 212 by generating internal pressure between the first plate 211 and the second plate 212.

Each of the first sidewalls (210, 21 0a, 210b) may include a first plate 211; a second plate 212 which is spaced apart from the first plate 211 and faces the first plate 211; a first connecting part 213 which connects the first plate 211 and the second plate 212; and a first air layer 214 may be formed between the first plate 211 and the second plate 212.

The first air layer 214 may serve as a buffer to reduce the external force applied to any one or more of the first plate 211 and the second plate 212.

The second sidewall 220 is provided as a pair of second sidewalls 220, and the pair of second sidewalls 220 are disposed to be spaced apart from each other in the second direction crossing (e.g., intersecting) the first direction. A pair of second sidewalls 220a and 220b may be disposed to face each other. The second sidewall 220 may be deformed by an external force. The second sidewall 220 may be deformed by bending. The second sidewall 220 may include an elastically deformable material.

The pair of second sidewalls 220a and 220b are coupled to the pair of first sidewalls 210a and 210b. one of the side end portions of the first sidewall 210a may be coupled to one of the side end portions of the pair of second sidewalls 220a and 220b, and the other one of the side end portions of the first sidewall 210b may be coupled to the other one of the side end portions of the pair of second sidewalls 220a and 220b.

The accommodation part 230 for accommodating a plurality of battery cells 300 may be provided in a space defined by the first sidewall 210 and the second sidewall 220. The accommodation part 230 may include a plurality of unit accommodation parts 231 for accommodating individual ones of the plurality of battery cells 300.

The plurality of battery cells 300 may be disposed in the first direction. In addition, the plurality of battery cells 300 disposed in the first direction may be disposed in the second direction crossing (e.g., intersecting) the first direction.

A space capable of being reduced by an external force may be included in the second sidewall 220. For example, the second sidewall 220 may be formed to have a hollow shape with an empty inner portion. The second sidewall 220 may include a third plate 221, a fourth plate 222, a second connecting part 223, and a second air layer 224.

The third plate 221 may be formed in a plate shape. The third plate 221 may be formed with a set length in the first direction.

The fourth plate 222 may be disposed to be spaced apart from the third plate 221 and face the third plate 221. The fourth plate 222 may be formed in a plate shape. The fourth plate 222 may be formed with a set length in the first direction.

The second connecting part 223 may connect the third plate 221 and the fourth plate 222. The second connecting part 223 may be provided as a pair of second connecting parts 223. A pair of second connecting parts 223a and 223b may connect both side end portions of the third plate 221a and the fourth plate 222.

Each of the second sidewalls 220 may include a third plate 221; a fourth plate 222 which is spaced apart from the third plate 221 and faces the third plate 221; a second connecting part 223 which connects the third plate 221 and the fourth plate 222; and a second air layer 224 may be formed between the third plate 221 and the fourth plate 222.

When an external force is applied to any one or more of the third plate 221 and the fourth plate 222, the second connecting part 223 may be deformed or may rupture. When the second connecting part 223 is ruptured by an external force, a distance between the third plate 221 and the fourth plate 222 may be reduced.

When pressure is applied to any one or more of the third plate 221 and the fourth plate 222 due to, for example, a swelling phenomenon of the battery cell 300, the second connecting part 223 may rupture, the distance between the third plate 221 and the fourth plate 222 may be reduced, and the space of the accommodation part 230 for accommodating the battery cell 300 in which the swelling phenomenon occurs may be expanded. In an embodiment, when the second connecting part 223 may be ruptured by an external force, a distance between the third plate 221 and the fourth plate 222 may be reduced.

The second air layer 224 may be provided between the third plate 221 and the fourth plate 222. In a state in which an external force is not applied to any one or more of the third plate 221 and the fourth plate 222, the second air layer 224 may serve to continuously maintain a shape of the third plate 221 and the fourth plate 222 by generating internal pressure between the third plate 221 and the fourth plate 222.

The second air layer 224 may serve as a buffer to reduce the external force applied to any one or more of the third plate 221 and the fourth plate 222.

The seating plate 260 may be coupled to the first sidewall 210 and the second sidewall 220 and may cover an opening provided in one surface of the accommodation part 230. The plurality of battery cells 300 may be seated on the seating plate 260.

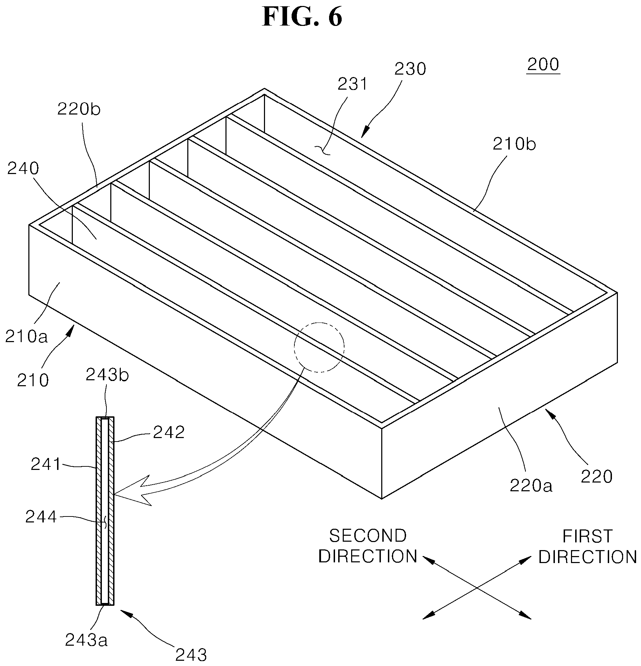

FIG. 6 is schematic perspective and partially enlarged cross-sectional views illustrating a cell frame according to some other embodiments of the present invention. FIG. 7 is a schematic cross-sectional view illustrating operational states of any one of the cell frames of FIGS. 5-6, according to some embodiments of the present invention.

Referring to FIGS. 4, 6, and 7, a cell frame 200 according to the some embodiments of the present invention may include a first sidewall 210, a second sidewall 220, a seating plate 260, and a first partition wall 240.

For convenience of illustration and in the interest of brevity, when the cell frame 200 according to the embodiments of FIG. 6 is described, only those elements that are not common with the embodiments of FIG. 5, such as the first partition wall 240, may be described.

The description about the cell frame 200 according to the embodiments of FIG. 5 may be applied as is to the remaining components of the cell frame 200 according to the embodiments of FIG. 6.

The first partition wall 240 may be disposed in an accommodation part 230 and may partition the accommodation part 230. The first partition wall 240 may be formed with a set length in a second direction. Both side end portions of the first partition wall 240 may be coupled to a pair of second sidewalls 220a and 220b.

The first partition wall 240 may be provided as a plurality of first partition walls 240, and the plurality of first partition walls 240 may be disposed to be spaced apart from each other. Accordingly, the accommodation part 230 may be partitioned into a plurality of unit accommodation parts 231 in a first direction. In an embodiment, the first partition wall 240 may be provided as a plurality of first partition walls 240 disposed to be spaced apart from each other in a first direction.

The first partition wall 240 may be deformed by an external force. The first partition wall 240 may be deformed by bending. The first partition wall 240 may include an elastically deformable material.

The first partition wall 240 may be formed to have a hollow shape with an empty inner portion. The first partition wall 240 may include a first partition wall plate 241, a second partition wall plate 242, a first partition wall connecting part 243, and a first partition wall air layer 244.

In an embodiment, the cell frame 400 may further include a first partition wall 240 which is disposed in the accommodation part 230 and may partition the accommodation part 230 and is able to be deformed by an external force, and has a hollow shape.

The first partition wall plate 241 may be formed in a substantially plate shape. The second partition wall plate 242 may be disposed to be spaced apart from the first partition wall plate 241 and face the first partition wall plate 241. The second partition wall plate 242 may be formed in a substantially plate shape.

The first partition wall connecting part 243 may connect the first partition wall plate 241 and the second partition wall plate 242. The first partition wall connecting part 243 may be provided as a pair of first partition wall connecting parts 243. A pair of first partition wall connecting parts 243a and 243b may connect both side end portions of the first partition wall plate 241 and the second partition wall plate 242.

In an embodiment, the first partition wall 240 may include a first partition wall plate 241; a second partition wall plate 242 which is spaced apart from the first partition wall plate 241 and faces the first partition wall plate 241; a first partition wall connecting part 243 which connects the first partition wall plate 241 and the second partition wall plate 242; and a first partition wall air layer 244 may be formed between the first partition wall plate 241 and the second partition wall plate 242.

When an external force is applied to any one or more of the first partition wall plate 241 and the second partition wall plate 242, the first partition wall connecting part 243 may be deformed or may rupture. According to an embodiment, when the first partition wall connecting part 243 is ruptured by an external force, a distance between the first partition wall plate 241 and the second partition wall plate 242 may be reduced.

When pressure is applied to any one or more of the first partition wall plate 241 and the second partition wall plate 242 due to, for example, a swelling phenomenon of a battery cell 300, the first partition wall connecting part 243 may rupture, the distance between the first partition wall plate 241 and the second partition wall plate 242 may be reduced, and the space of the unit accommodation part 231 for accommodating the battery cell 300 in which the swelling phenomenon occurs may be expanded.

The first partition wall air layer 244 may be provided between the first partition wall plate 241 and the second partition wall plate 242. In a state in which an external force is not applied to any one or more of the first partition wall plate 241 and the partition wall second plate 242, the first partition wall air layer 244 may serve to continuously maintain a shape of the first partition wall plate 241 and the second partition wall plate 242 by generating internal pressure between the first partition wall plate 241 and the second partition wall plate 242.

The first partition wall air layer 244 may serve as a buffer to reduce the external force applied to any one or more of the first partition wall plate 241 and the second partition wall plate 242.

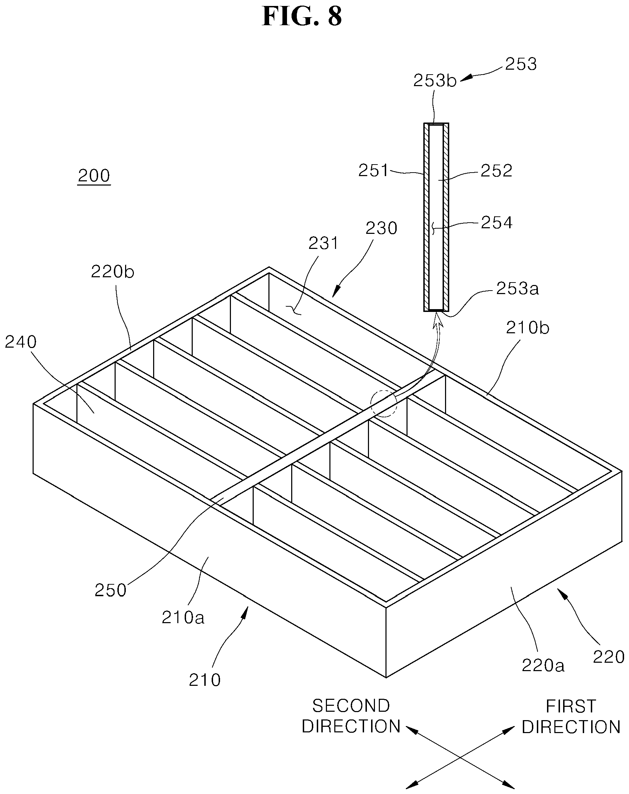

FIG. 8 is schematic perspective and partially enlarged cross-sectional views illustrating a cell frame according to still other embodiments of the present invention. FIG. 9 is a schematic cross-sectional view illustrating operational states of the cell frame of FIG. 8, according to some embodiments of the present invention.

Referring to FIGS. 4, 8, and 9, a cell frame 200 according to the some embodiments of the present invention may include a first sidewall 210, a second sidewall 220, a seating plate 260, a first partition wall 240, and a second partition wall 250.

For convenience of illustration and in the interest of brevity, when the cell frame 200 according to the embodiments of FIG. 8 is described, only those elements that are not common with the embodiments of FIGS. 5-6, such as the second partition wall 250, may be described.

The second partition wall 250 may be disposed to intersect the first partition wall 240 to partition an accommodation part 230. The second partition wall 250 may be formed with a set length in a first direction. Both side end portions of the second partition wall 250 may be connected to a pair of first sidewalls 210a and 210b.

In an embodiment, the second partition wall 250 may be provided as a plurality of second partition walls 250, and the plurality of second partition walls 250 may be disposed to be spaced apart from each other in a second direction. Accordingly, the accommodation part 230 may be partitioned into a plurality of unit accommodation parts 231 in the second direction.

The second partition wall 250 may be deformed by an external force. The second partition wall 250 may be deformed by bending. The second partition wall 250 may include an elastically deformable material.

The second partition wall 250 may be formed to have a hollow shape with an empty inner portion. The second partition wall 250 may include a third partition wall plate 251, a fourth partition wall plate 252, a second partition wall connecting part 253, and a second partition wall air layer 254.

The third partition wall plate 251 may be formed in a substantially plate shape. The fourth partition wall plate 252 may be disposed to be spaced apart from the third partition wall plate 251 and face the third partition wall plate 251. The fourth partition wall plate 252 may be formed in a substantially plate shape.

The second partition wall connecting part 253 may connect the third partition wall plate 251 and the fourth partition wall plate 252. The second partition wall connecting part 253 may be provided as a pair of second partition wall connecting parts 253. A pair of second partition wall connecting parts 253a and 253b may connect both side end portions of the third partition wall plate 251 and the fourth partition wall plate 252.

When an external force is applied to any one or more of the third partition wall plate 251 and the fourth partition wall plate 252, the second partition wall connecting part 253 may be deformed or may rupture. When the second partition wall connecting part 253 is ruptured by an external force, a distance between the third partition wall plate 251 and the fourth partition wall plate 252 may be reduced.

When pressure is applied to any one or more of the third partition wall plate 251 and the fourth partition wall plate 252 due to, for example, a swelling phenomenon of a battery cell 300, the second partition wall connecting part 253 may rupture, the distance between the third partition wall plate 251 and the fourth partition wall plate 252 may be reduced, and the space of the unit accommodation part 231 for accommodating the battery cell 300 in which the swelling phenomenon occurs may be expanded.

The second partition wall air layer 254 may be provided between the third partition wall plate 251 and the fourth partition wall plate 252. In a state in which an external force is not applied to any one or more of the third partition wall plate 251 and the fourth partition wall plate 252, the second partition wall air layer 254 may serve to continuously maintain a shape of the third partition wall plate 251 and the fourth partition wall plate 252 by generating internal pressure between the third partition wall plate 251 and the fourth partition wall plate 252.

The second partition wall air layer 254 may serve as a buffer to reduce the external force applied to any one or more of the third partition wall plate 251 and the fourth partition wall plate 252.

According to some embodiments of the present invention, because a cooling fluid does not fill a lower region of a container where a cell frame is located but fills an upper region of a container where a second portion of a battery cell exposed from the cell frame is located, the second portion of the battery cell including a cell terminal with a large amount of heat generation can be intensively cooled, and because the cooling fluid does not need to fully fill the container, an amount of the cooling fluid injected into the container can be reduced.

According to some embodiments of the present invention, when thermal runaway of a battery cell occurs, a cell frame that accommodates the battery cell and is deformed by an external force can reduce an increase in internal pressure of a container to prevent or substantially reduce damage to the container.

## Claims

1. A cell frame (200) comprising:
a pair of first sidewalls (210a, 210b) spaced apart from each other in a first direction and configured to be deformed by an external force; and
a pair of second sidewalls (220a, 220b) spaced apart from each other in a second direction crossing the first direction, coupled to the pair of first sidewalls (210a, 210b), and configured to be deformed by an external force.

2. The cell frame (200) of claim 1, wherein an accommodation part (230) in which a plurality of battery cells (300) are accommodated is provided in a space defined by the first sidewalls (210a, 210b) and the second sidewalls (220a, 220b).

3. The cell frame (200) of claim 1 or 2, further comprising:
a seating plate (260) coupled to the first sidewalls (210a, 210b) and the second sidewalls (220a, 220b) and configured to cover an opening provided in one surface of the accommodation part (230) and on which the battery cells (300) are seated.

4. The cell frame (200) of claim 1 or 2, wherein in any one or more of the first sidewalls (210a, 210b) and the second sidewalls (220a, 220b) define a space therebetween, the space being reduced in response to an external force is define sidewalls.

5. The cell frame (200) of any of claims 1 to 4, wherein each of the first sidewalls (210a, 210b) comprises:
a first plate (211);
a second plate (212) spaced apart from the first plate (211) and facing the first plate (211), the first plate (211) and second plate (212) being separated by a first air layer(214) ; and
a first connecting part (213) connecting the first plate (211) and the second plate (212).

6. The cell frame (200) of claim 4, wherein each one of the second sidewalls (220) comprises:
a third plate (221, 221a);
a fourth plate (222) spaced apart from the third plate (221, 221a) and facing the third plate (221, 221a), the third plate (221, 221a) and fourth plate (222) being separated by a second air layer (224) ; and
a second connecting part (223) connecting the third plate (221, 221a) and the fourth plate (222).

7. The cell frame (200) of claim 4, further comprising:
a first partition wall (240) in the accommodation part (230) and having a hallow shape, the first partition wall (240) being configured to partitioning the accommodation part (230) and to be deformed by an external force.

8. The cell frame (200) of any of claims 1 to 7, wherein the first partition wall (240) comprises:
a first partition wall plate (241);
a second partition wall plate (242) spaced apart from the first partition wall plate (241) and facing the first partition wall plate (241), the first partition wall plate (241) and second partition wall plate (242) being separated by a first partition wall air layer (244); and
a first partition wall connecting part (243) connecting the first partition wall plate (241) and the second partition wall plate (242).

9. The cell frame (200) of any of claims 1 to 8, further comprising:
a second partition wall (250) positioned to intersect the first partition wall (240) and having a hollow shape, the second partition wall (250) being configured to partition the accommodation part (230) and to be deformed by an external force.

10. The cell frame (200) of claim 9, wherein the second partition wall (250) comprises:
a third partition wall plate (251);
a fourth partition wall plate (252) spaced apart from the third partition wall plate (251) and facing the third partition wall plate (251)the third partition wall plate (251) and fourth partition wall plate (252) being separated by a second partition wall air layer (254);
a second partition wall connecting part (253) connecting the third partition wall plate (251) and the fourth partition wall plate (252).

11. The cell frame (200) of claim 10, wherein a distance between the third partition wall plate (251) and the fourth partition wall plate i(252) s reduced in response to the second partition wall connecting part (253) being ruptured by an external force.

12. An energy storage system comprising:
a container (100);
the cell frame (200) of claim 1 accommodated in the container (100);
a plurality of battery cells (300) accommodated in the cell frame (200); and
a cooling fluid (400) configured to be injected into the container (100) and in which the plurality of the battery cells (300) are immersed.

13. The energy storage system of claim 12, wherein:
a first portion (300a) of one of the battery cells (300) is configured to be inserted into the cell frame (200); and
a second portion (300b) of the one of the battery cells (300) is exposed from the cell frame (200).

14. The energy storage system of claim 13, wherein:
the second portion (300b) is configured to be immersed in the cooling fluid (400); and
the cell frame (200) is not immersed in the cooling fluid (400).

15. The energy storage system of claim 13 or 14, wherein the second portion (300b) comprises:
a vent (310); and
a cell terminal (320).
